# EUROPÄISCHE PATENTANMELDUNG

(11) **EP 4 458 495 A2**
(43) Veröffentlichungstag der Anmeldung: **06.11.2024**
(21) Anmeldenummer: 24184469.5
(22) Anmeldetag: 16.09.2021
(51) Int. Cl.: B22F 12/00

(54) **FERTIGUNGSSYSTEM ZUR ADDITIVEN FERTIGUNG EINES WERKSTÜCKS**

(62) Teilanmeldung aus: 21197233.6
(71) Anmelder: United Grinding Group Management AG, 3014 Bern (CH)
(72) Erfinder: CLOOTS, Michael, 9008 St. Gallen (CH); WIRTH, Florian, 9000 St. Gallen (CH); BRUNNER, Pascal, 9100 Herisau (CH); LAUBER, Philipp, 9322 Egnach (CH); FRAUCHIGER, Alex, 9000 St. Gallen (CH); GUTKNECHT, Kai, 8808 Pfäffikon (CH)
(74) Vertreter: Maiwald GmbH

(57) **Zusammenfassung**

Die vorliegende Offenbarung betrifft ein Fertigungssystem zur additiven Fertigung eines Werkstücks und ein additives Fertigungsverfahren. Das Fertigungssystem zur additiven Fertigung eines Werkstücks umfasst eine Bauplatte, eine Hubvorrichtung für die Bauplatte, eine Rakelvorrichtung, eine optische Vorrichtung und eine Steuereinheit. Die Rakelvorrichtung umfasst mindestens ein Beschichterelement zum Aufbringen oder Abtragen eines Pulvermaterials auf die Bauplatte. Die optische Vorrichtung umfasst ein optisches Element zur Aufnahme von Bilddaten von der Bauplatte und/oder von der Pulverschicht. Die Hubvorrichtung ist zum Anheben und/oder Absenken der Bauplatte gestaltet. Die Steuereinheit ist gestaltet, um die Hubvorrichtung auf Grundlage der Bilddaten zu steuern.

## Beschreibung

### Technisches Gebiet

Die vorliegende Offenbarung betrifft ein Fertigungssystem zur additiven Fertigung eines Werkstücks und ein additives Fertigungsverfahren.

### Hintergrund

Additive Fertigung, insbesondere selektives Laserschmelzen (Selective Laser Melting (SLM) oder Laser Powder Bed Fusion (LPBF)) ist ein generatives Fertigungsverfahren, das zur Gruppe der Strahlschmelzverfahren gehört. Beim selektiven Laserschmelzen wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird so lange wiederholt, bis alle Schichten umgeschmolzen sind. Das fertige Bauteil wird vom überschüssigen Pulver gereinigt und nach Bedarf bearbeitet oder sofort verwendet.

Herkömmliche Maschinen für die additive Fertigung sind häufig einfach ausgeführt, daher mangelt es im Vergleich zum Präzisions-Werkzeugmaschinenbau an Robustheit und Genauigkeit. Außerdem erfordert solche Maschine eine zeitaufwendige Einrichtung und Vorbereitung.

Das Fertigungssystem zur additiven Fertigung eines Werkstücks kann daher noch weiter verbessert werden.

### Zusammenfassung

Es ist daher eine Aufgabe der vorliegenden Offenbarung, ein verbessertes Fertigungssystem bereitzustellen, das die Produktivität additiver Fertigung erhöht.

Diese Aufgabe wird durch ein Fertigungssystem zur additiven Fertigung eines Werkstücks und ein additives Fertigungsverfahren nach den unabhängigen Ansprüchen gelöst. Vorteilhafte Ausführungsformen und Weiterbildungen sind den Unteransprüchen und der nachfolgenden Beschreibung zu entnehmen.

Die vorliegende Offenbarung umfasst ein Fertigungssystem zur additiven Fertigung eines Werkstücks, umfassend eine Bauplatte, eine Hubvorrichtung für die Bauplatte, eine Rakelvorrichtung, eine optische Vorrichtung, und eine Steuereinheit. Die Rakelvorrichtung umfasst mindestens ein Beschichterelement zum Aufbringen oder Abtragen eines Pulvermaterials auf die oder von der Bauplatte. Die optische Vorrichtung umfasst ein optisches Element zur Aufnahme von Bilddaten von der Bauplatte und/oder von der Pulverschicht. Die Hubvorrichtung ist zum Anheben und/oder Absenken der Bauplatte gestaltet. Die Steuereinheit ist gestaltet, um die Hubvorrichtung auf Grundlage der Bilddaten zu steuern.

Der Vorteil des erfindungsbemäßen Fertigungssystems liegt darin, dass ein einwandfreier Ablauf der additiven Fertigung gewährleistet werden kann. Somit kann die Produktivität der additiven Fertigung erhöht werden. Insbesondere kann eine Echtzeitsteuerung des Fertigungssystems durch eine parallele Überwachung der additiven Fertigung realisiert werden.

Das additive Fertigungssystem kann zur Herstellung des Werkstücks durch ein selektives Schmelzen (Selective Laser Melting, SLM) oder Laser Powder Bed Fusion (LPBF) eines Pulvermaterials gestaltet sein.

Die Rakelvorrichtung kann sich in einer Baukammer des Fertigungssystems befinden. Die Rakelvorrichtung kann zum Auftragen eines frisch aufbereiteten Pulvermaterials auf die Bauplatte und/oder Abtragen eines Restpulvermaterials von der Bauplatte nach einem Schmelzvorgang eingerichtet sein. Durch eine Bewegung der Rakelvorrichtung kann das Beschichterelement in horizontaler Richtung relativ zu der Bauplatte bewegen. Vorzugsweise kann das Beschichterelement einer Oberfläche der Bauplatte, auf die das Pulvermaterial bereitgestellt wird, zugewandt angeordnet sein.

Dabei kann das Beschichterelement dazu dienen, das Pulvermaterial beispielsweise aus einem Pulverbehälter einzunehmen und dies auf die Bauplatte schichtweise aufzutragen. Zusätzlich kann das Beschichterelement nach jedem Schmelzvorgang das überschüssige Pulvermaterial und/oder Schweißspritzer, der während der additiven Fertigung entstanden ist, in einen Überlaufbehälter transportieren.

Das Beschichterelement kann beispielsweise eine Gummilippe, eine Klinge aus Metall und/oder Keramik, eine silikon-getränkte Bürste und/oder eine Carbonbürste sein. Das Beschichterelement kann dazu eingerichtet sein, um das Pulvermaterial auf die Bauplatte auf einer vorbestimmten Höhe gleichmäßig aufzutragen und den Pulverrest und/oder Schweißspritzer von der Bauplatte rückstandslos abzutragen.

Die Bauplatte kann sich beispielsweise in einem Baubehälter befinden. Die Bauplatte kann dazu dienen, das schichtweise aufgetragene frische Pulvermaterial aufzunehmen und das selektive Schmelzen des Pulvermaterials dort zu ermöglichen. Nach mehrmaligem Wiederholen des Auftragens des Pulvermaterials und selektiven Schmelzens kann schließlich das Werkstück erzeugt werden.

Die Bauplatte kann mit der Hubvorrichtung gekoppelt sein, um eine Bewegung der Bauplatte, insbesondere in vertikaler Richtung, innerhalb des Baubehälters zu ermöglichen. Vorzugsweise kann die Bauplatte nach jedem Schmelzvorgang oder jeder Belichtung des Laserstrahls mittels der Hubvorrichtung schrittweise nach unten herabgesetzt werden, um den nachfolgenden Schmelzvorgang des erneut aufgetragenen Pulvermaterials zu ermöglichen.

Das optische Element kann beispielsweise eine Off-axis Überwachungseinrichtung, wie z.B. eine Off-axis Kamera umfassen. Die Off-axis Überwachungseinrichtung kann zur Überwachung einer Wärmeverteilung einer additiv gefertigten Bauteilschicht des Werkstücks gestaltet sein. Mit Hilfe der Off-axis- Überwachungseinrichtung kann auch die Möglichkeit zur Erfassung von Pulverauftragsfehlern bestehen, die während eines Beschichtungsvorgangs auftreten können. Beim Pulverauftrag kann in Fahrtrichtung der Rakelvorrichtung linienartige Strukturen entstehen. Eine Sichtbarkeit solcher Pulverauftragsfehler kann sich am stärksten erhöhen, wenn sie durch eine seitliche Beleuchtung zur Erzeugung eines Schattens angestrahlt werden. Der Pulverauftragsfehler und/oder der Beschichtungsfehler kann indirekt über einen charakteristischen Schatten mit Hilfe der Off-axis- Überwachungseinrichtung erfasst werden.

Die Steuereinheit kann die von der optischen Vorrichtung generierten Bilddaten empfangen und während der Belichtung einer Pulverschicht auftretende und erfasste Emissionsdaten innerhalb eines Bildes integrieren. Das Resultat dieser Erfassung kann einer Heat-Map der aktuell aufgebauten Schicht entsprechen. Aus dieser Heat-Map kann eine Möglichkeit bestehen, thermische Unregelmäßigkeiten während der additiven Fertigung zu erfassen und bei ausreichend schneller Verarbeitung dieser Informationen bereits gegensteuernde Maßnahmen während einer darauffolgenden Schicht zu ergreifen. Dies kann beispielsweise eine dynamische Anpassung von Belichtungsreihenfolgen zu scannender Bereiche innerhalb einer Schicht, Laserleistungen oder einer Scangeschwindigkeit innerhalb bestimmter Scanbereiche sein. Die Steuereinheit kann zusätzlich auf Grundlage der erfassten Daten und/oder der Heat-Map die Bewegung der Hubvorrichtung kontrollieren, um die Höhe der Bauplatte anzupassen. Auf diese Weise kann die Auftragsqualität des Pulvermaterials, somit die Produktivität additiver Fertigung erhöht werden.

In einer Ausführungsform umfasst die Rakelvorrichtung einen Rakelrevolver mit einem zylindrischen Grundkörper, dessen Umfangsfläche mindestens eine Aufnahme aufweist, in die das Beschichterelement eingefügt ist.

Der Begriff Revolver kann so verstanden werden, dass es sich um einen Drehkörper handelt, der sich um seine Längsachse dreht. Der Drehkörper kann somit zylindrisch geformt sein. Der zylindrische Drehkörper oder Grundkörper kann an seiner Umfangsfläche mindestens eine Aufnahme umfassen. Die Aufnahme kann beispielsweise als eine Nut geformt sein, die sich zumindest teilweise in Längsrichtung des zylindrischen Grundkörpers erstreckt. In die Aufnahme oder Nut kann das Beschichterelement kraftschlüssig oder formschlüssig verbunden sein. Als Alternative kann die Aufnahme als ein Vorsprung ausgebildet sein, der von der Umfangsfläche des zylindrischen Grundkörpers nach außen vorsteht. An diesem Vorsprung kann das Beschichterelement befestigt sein.

Der Rakelrevolver kann sich auf der Bauplatte im Wesentlichen senkrecht zur Längsachse seines zylindrischen Drehkörpers bewegen. Der Rakelrevolver kann dabei so eingerichtet sein, dass sich der zylindrische Grundkörper solange nicht dreht, bis die Steuereinheit eine Abnormalität der aufgetragenen Pulverschicht erfasst. Mit andren Worten kann ein Beschichterelement solange das Pulvermaterial auf die Bauplatte auftragen und/oder von der Bauplatte abtragen bis die Auftragsqualität des Pulvermaterials eine vorbestimmte Anforderung erfüllt.

In einer Ausführungsform weist der Rakelrevolver mindestens eine weitere Aufnahme auf, in die ein weiteres Beschichterelement einfügbar ist. Der Rakelrevolver kann mindestens eine zweite Aufnahme oder mehrere Aufnahmen aufweisen, die an der Umfangsfläche des Rakelrevolvers entlang des Umfangsrichtung voneinander beabstandet angeordnet sind.

Die Steuereinheit kann beispielsweise mittels der optischen Vorrichtung die Auftragsqualität des Pulvermaterials auswerten und einen Fehler an dem aktuell verwendeten Beschichterelement feststellen, wenn die Auftragsqualität des Pulvermaterials von der vorbestimmten Anforderung abweicht. Im Falle des Fehlers kann sich der Rakelrevolver nach Schwere der Beschädigungen des aktuellen Beschichterelements drehen und auf ein nächstes, insbesondere fehlerfreies Beschichterelement umschalten.

Auf diese Weise kann ein Zustand des aktuell verwendeten Beschichterelements in Echtzeit überwacht werden und der Fehler oder die Beschädigung des Beschichterelements sofort behoben werden. Somit kann die additive Fertigung ohne Reparaturpause kontinuierlich durchgeführt werden.

In einer Ausführungsform weist der Rakelrevolver mindestens eine weitere Aufnahme auf, in die ein Reinigungselement zum Abtragen von Pulverresten einfügbar ist. Das Reinigungselement kann beispielsweise eine herkömmliche Bürste, silikon-getränkte Bürste und/oder eine Carbonbürste sein. Das Reinigungselement kann dazu gestaltet sein, nach einem Abschluss der additiven Fertigung einen Boden der Baukammer, der eine Schnittstelle zwischen der Baukammer und dem Pulvervorratsbehälter, dem Pulverüberlaufbehälter und/oder dem Baubehälter umfassen kann, zu reinigen. Das Reinigungselement kann sich in der Aufnahme zumindest teilweise in Längsrichtung des zylindrischen Grundkörpers des Rakelrevolvers erstrecken.

Nach dem Abschluss der additiven Fertigung kann sich der Rakelrevolver drehen und auf das Reinigungselement umschalten, sodass dieses dem Boden der Baukammer zugewandt ist. Das Reinigungselement kann somit den Pulverrest und/oder den Schweißspritzer vom Boden der Baukammer und/oder der Schnittstelle zwischen der Baukammer und den Behältern abtragen. Auf diese Weise kann es sichergestellt werden, dass kein Pulverrest während der Entnahme der Behälter verschleppt werden kann.

In einer Ausführungsform weist der Rakelrevolver mindestens eine weitere Aufnahme auf, in die ein Beleuchtungselement zur Beleuchtung der Pulverschicht für die Aufnahme der Bilddaten einfügbar ist. Das Beleuchtungselement kann mindestens ein Leuchtmittel, wie z.B. LED, Halogen, Laser, Neon, Xenon Lampe, etc. umfassen. Vorzugsweise kann das Beleuchtungsmittel NIR (Near Infrared) - LED umfassen.

Das Beleuchtungselement kann zur Beleuchtung eines Baufeldes dienen, der aktuell von der Rakelvorrichtung überfahren wird. Vorzugsweise kann das Beleuchtungselement das gesamte Baufeld vollständig beleuchten. Das Beleuchtungselement kann sich in der Aufnahme zumindest teilweise in Längsrichtung des Rakelrevolvers erstrecken. Das Beleuchtungsmittel kann dabei so positioniert, dass ein fehlerhafter Pulverauftrag einen Schattenwurf auf der Pulverschicht verursacht, der von dem oberhalb des Baufelds angebrachten optischen Element erfasst wird. Auf diese Weise kann die optische Vorrichtung eine zuverlässige Off-axis Überwachung der Bauplatte und/oder der frisch aufgetragenen Pulverschicht ermöglichen. Der Emissionsbereich der LED kann beispielsweise bei 850 nm liegen.

Zusätzlich und/oder alternativ kann die Rakelvorrichtung mindestens ein Beleuchtungselement umfassen, das am Trägerkörper der Rakelvorrichtung vorzugsweise an einer unteren Seite der Rakelvorrichtung in Fahrtrichtung und/oder entgegengesetzter Fahrtrichtung der Rakelvorrichtung angeordnet ist, um das gesamte Baufeld lückenlos zu beleuchten. In einer Ausführungsform ist das optische Element eine Off-axis-Kamera mit einer Filtervorrichtung zur Erfassung von Bilddaten nur mit Wellenlängen zwischen 820 und 870 nm, bevorzugt 830 bis 860 nm. Das optische Element kann in der Baukammer mindestens eine oder zwei hochauflösende Multifunktionskameras mit hoher spektraler Bandbreite umfassen, die während der additiven Fertigung unter Verwendung der Filtervorrichtung, i.e. optischer Bandpassfilter thermische Prozessemissionen erfassen können.

Eine Grundvoraussetzung für eine hochstehende Werkstückqualität kann ein fehlerfreier Pulverauftrag während der additiven Fertigung sein. Typische Fehlerbilder können ein lokal unzureichender Pulverauftrag oder Riefen im Pulverbett sein, welches beispielsweise durch lokale Defekte der Rakelvorrichtung entstanden sein kann. Um etwaigen Pulverauftragsfehlern vorzubeugen, kann die frisch aufgetragene Pulverschicht optisch inspiziert werden.

Die Off-axis Kamera kann in der Baukammer angeordnet sein und aufgrund des verwendeten Bandpassfilters für die Off-axis Thermographie ausschließlich Signale im Wellenlängenbereich zwischen 820 und 870 nm, bevorzugt 830 bis 860 nm aufzeichnen. Zur Beleuchtung der frisch aufgetragenen Pulverschicht kann das im Rakelrevolver integrierte Beleuchtungsmittel, e.g. NIR-LED verwendet. Das Beleuchtungsmittel kann dabei so positioniert, dass ein fehlerhafter Pulverauftrag einen Schattenwurf auf der Pulverschicht verursacht, der von der oberhalb des Baufelds angebrachten optischen Vorrichtung erfasst wird.

Da die Rakelvorrichtung nur einen Teil des Baufelds und/oder der Pulverschicht beleuchten kann, arbeitet die Off-axis-Kamera mit einer Langzeitbelichtung. Die Belichtungszeit der Off-axis-Kamera kann dabei der Überfahrzeit der Rakelvorrichtung auf der Bauplatte angepasst werden. Die Baukammer kann daher so eingerichtet sein, dass keine störenden Lichtsignale von außen in die Baukammer eintreten können. Die Off-axis-Kamera kann ausschließlich das reflektierte Licht von der Pulverbettoberfläche erfassen. Da der frische Pulverauftrag wie auch die Beleuchtung durch die Bewegung der Rakelvorrichtung bei konstanter Geschwindigkeit passiert, entsteht während der Langzeitaufnahme durch die Off-axis-Kamera eine gleichmäßig beleuchtete Aufnahme.

In einer Ausführungsform kann die Off-axis Kamera zur Laserkalibration und/oder Baukammerkalibration gestaltet sein. Durch erhöhte Temperatur innerhalb der Baukammer während des Schmelzvorgangs können thermische Dehnungen der Baukammer, der Bauplatte und/oder der Galvomotoren im Scanner (e.g. Gaindrift und Offsetdrift) nicht vermieden werden.

Für die Kamerakalibration kann eine Kalibrierplatte erforderlich sein, auf der ein bestimmtes Kreuzmuster hochpräzise und extrem genau aufgetragen ist (Genauigkeit < 1 µm). Diese Platte kann vor dem Beginn der additiven Fertigung so in die Baukammer gelegt werden, dass das Muster exakt in der zu erwartenden Prozessebene liegt. Die Rakelvorrichtung fährt mit dem eingeschalteten Beleuchtungsmittel über die Kalibrierplatte, so dass die Off-axis-Kamera ein hochauflösendes Bild von der Platte erstellen kann.

Da die Kamera leicht schräg und nicht absolut vertikal oberhalb des Baufelds angeordnet sein kann, kann das Kamerabild vom Baufeld entzerrt werden (von trapezförmig in rechteckig). Ein in der Steuereinheit hinterlegtes Softwareprogramm kann das (Kreuz-)Muster von der Kalibrierplattenaufnahme erfassen und dieses entzerren. Nach Abschluss der Bildentzerrung können nun alle Aufnahmen mit der Off-axis-Kamera verzerrungsfrei erstellt werden. Die Kamera kann somit als kalibriert gelten.

Bei einer ausgeprägten Scanfeldverzerrung können Maßhaltigkeitsverluste auftreten, sodass Scanfeldentzerrungen erforderlich sind. Eine präzise Kamerakalibration der Off-Axis Kamera kann eine Grundvoraussetzung für eine erfolgreiche Umsetzung einer Scanfeldausrichtung sowie Scanfeldentzerrung sein.

Dazu kann der Scanner ein Prüfmuster, das beispielsweise aus 11 × 11 Kreuzen besteht, deren Hauptachsen diagonal zum Referenzkoordinatensystem verlaufen, auf die blanke Bauplatte oder auf eine eloxierte Aluminiumplatte lasern. Die Off-axis-Kamera kann dabei das Scanmuster aufzeichnen. Die Steuereinheit kann anhand der Off-axis-Aufnahme, den genauen Kreuzungspunkt der beiden Hauptachsen der gelaserten Kreuze berechnen. Mittels der kalibrierten Kamera kann nun über die Steuereinheit überprüft werden, ob IST-Positionen der Kreuzungspunkte von den SOLL-Positionen abweichen. Eine mögliche Abweichung von den SOLL-Positionen kann an die Steuereinheit, wie z.B. Scannersoftware übergeben werden, die eine neue Korrekturdatei aus diesen Daten berechnet und an den Scanner zurückgibt. Dieses Prozedere kann mit jedem Scanner erfolgen.

Bei der Scanfeldausrichtung kann das Baufeld als Ganzes driften. Bei einer Single-Strahlanlage ist dieser Drift kaum wahrnehmbar. Bei einer Mehrstrahlanlage können sich jedoch die Drifts zweier Scanner aufaddieren, so dass der Gesamtdrift - insbesondere beim gemeinsamen Erzeugen eines Werkstücks - zu Mikroporositäten führen kann, die sich negativ auf die resultierende Werkstücksqualität auswirken. Aufgrund der nicht zu eliminierenden thermischen Einflüsse auf Positionsgenauigkeit der Laser auf dem Baufeld kann eine permanente Scanfeldausrichtung nahezu unerlässlich sein.

Um zwei oder mehrere Scanfelder aufeinander auszurichten, kann es zweier Stützpunkte -die Kreuzungspunkte zweier sich kreuzender Vektoren zum Einsatz kommen. Ein Scanner kann zwei Kreuze (oder Kreuzungspunkte) auf das Baufeld lasern und prüfen, ob die Kreuzungspunkte von der erwarteten Koordinate abweichen. Liegt eine Abweichung vor, kann das Scanfeld wieder in die vorbestimmte Position gedreht und/oder verschoben werden. Dieses Prozedere kann für jeden Scanner erfolgen. Die Scanfeldausrichtung kann auch während der additiven Fertigung durchgeführt werden. Dafür kann das Softwareprogramm eine zu scannende Fläche der aktuellen Schicht analysieren und dort wo möglich, nach Abschluss eines Schmelzvorgangs zwei Kreuze auf einen Bereich der bereits bestrahlten Fläche setzen.

In einer Ausführungsform umfasst die Rakelvorrichtung einen Trägerkörper und der Trägerkörper und/oder der Rakelrevolver umfasst ein Wechselmechanismuselement zur lösbaren Befestigung des Rakelrevolvers an dem Trägerkörper. Das Wechselmechanismuselement kann dafür sorgen, dass der Rakelrevolver einfach und schnell von dem Trägerkörper der Rakelvorrichtung entfernt werden kann. Das Wechselmechanismuselement kann über eine formschlüssige, kraftschlüssige, (elektro-) magnetische und/oder Klemm-Verbindung verfügen. Auf diese Weise kann der Rakelrevolver ohne großen Aufwand einfach und schnell ausgetauscht werden.

In einer Ausführungsform umfasst der Trägerkörper und/oder der Rakelrevolver ein Befestigungselement zur lösbaren Befestigung eines Behälterdeckels von einem Baubehälter und/oder einem Pulverbehälter.

Zur Aufrechterhaltung einer inertisierten Atmosphäre innerhalb des Bau- und Pulverbehälters sollen die Behälter außerhalb des additiven Fertigungssystems ausschließlich mit aufgesetzten Behälterdeckel gehandhabt werden. Innerhalb der Baukammer können die Behälterdeckel erst abgenommen werden, wenn der Inertisierungszustand der Baukammer vorliegt. Sobald die Schutzgasatmosphäre vorliegt und der Restsauerstoffgehalt unterhalb einer Zielschwelle liegt, können die Behälterdeckel des Bau- und Pulverbehälters mittels der Rakelvorrichtung entnommen werden.

Dazu kann die Rakelvorrichtung über den Deckel des Baubehälters oder Pulverbehälters fahren. Gleichzeitig können der Trägerkörper und/oder der Rakelrevolver mittels des Befestigungselements, das beispielsweise wie eine T-förmige Nut ausgebildet ist, den Behälterdeckel über ein darauf befindliches Verbindungselement, das beispielsweise wie ein T-förmiger Vorsprung ausgebildet ist, formschlüssig greifen. Das Befestigungselement und das Verbindungselement können jedoch paarweise eine unterschiedliche Form aufweisen, sodass diese formschlüssig lösbar miteinander in Eingriff stehen können. Auf diese Weise können die Behälterdeckel des Baubehälters und/oder Pulverbehälters von dem entsprechenden Behälter einwandfrei entnommen werden.

In einer Ausführungsform umfasst der Trägerkörper und/oder der Rakelrevolver ein Höhenverstellungselement zur Höhenbeweglichkeit des gehaltenen Behälterdeckels. Das Höhenverstellungselement kann den Behälterdeckel, der entweder von dem Pulverbehälter oder dem Baubehälter abgenommen wurde, anheben, um einen kontaktlosen Transport des Deckels mit dem Baufeld sicherzustellen.

Damit sich der Behälterdeckel während des Transports zu einem Lagerort nicht von dem Trägerkörper und/oder Rakelrevolver lösen kann, wird er über einen im Rakelrevolver angeordneten Nocken festgehalten. Der Nocken kann in einer entgegengesetzten Richtung relativ zu der Einführrichtung des Deckels angeordnet sein. Auf diese Weise kann der Behälterdeckel bei der Aufnahme beispielsweise über die Rakelvorrichtung nicht aus der T-Nut herausgleitet, sondern wird seine Bewegung durch den Nocken beschränkt. Der Lagerort kann sich innerhalb der Baukammer, jedoch außerhalb des Baufeldes befinden.

In einer Ausführungsform umfasst das Fertigungssystem zur additiven Fertigung weiterhin einen Abstandssensor zum Erfassen eines Abstands zwischen der Bauplatte und dem Beschichterelement. Der Abstandssensor kann vorzugsweise an einer Bodenseite der Rakelvorrichtung angeordnet sein, die der Bauplatte zugewandt ist. Das Fertigungssystem und/oder die Rakelvorrichtung kann mehrere Abstandssensoren aufweisen, um eine präzise Messung des Abstands zwischen der Bauplatte und dem Beschichterelement zu ermöglichen. Der Abstandssensor kann ferner zur Abstandsmessung zwischen dem Beschichterelement und einer Grundplatte des Pulverbehälters gestaltet sein, um die Menge des im Pulverbehälter vorhandenen Pulvermaterials präzise zu ermitteln.

Der Abstandssensor kann beispielsweise ein induktiver Sensor, ein Ultraschallsensor oder ein Radarsensor sein, der eine berührungslose Abstandsmessung ermöglicht.

In einer Ausführungsform umfasst das Fertigungssystem zur additiven Fertigung weiterhin einen Kontaktsensor zum Erfassen eines Kontakts zwischen der Bauplatte und dem Beschichterelement. Der Kontaktsensor kann vorzugsweise an der Bodenseite der Rakelvorrichtung angeordnet sein, die der Bauplatte zugewandt ist. Der Kontaktsensor kann ein taktiler Kontaktsensor sein, der direkt mit der Bauplatte in Berührung kommen kann.

Vor dem Beginn der additiven Fertigung kann die Bauplatte mittels der Hubvorrichtung an den Boden der Baukammer angehoben werden. Die Rakelvorrichtung kann über die Bauplatte fahren und der Kontaktsensor kann dabei an mehreren Stellen den Kontakt mit der Bauplatte erfassen. Um dies zu erleichtern, kann das Fertigungssystem oder die Rakelvorrichtung zwei oder mehrere Kontaktsensoren aufweisen, die an der Bodenseite der Rakelvorrichtung voneinander beabstandet angeordnet sein können. Auf diese Weise kann eine Position der Bauplatte, insbesondere Höhe und Neigung relative zu einer horizontalen Ebene präzise erfasst werden und entsprechend der Messergebnisse korrigiert werden.

In einer Ausführungsform umfasst die optische Vorrichtung weiterhin einen On-axis-Sensor, der in einem Strahlengang zur Bestrahlung der Pulverschicht angeordnet ist, um Prozessemissionen aus einem Schmelzbadbereich beim Bestrahlen der Pulverschicht zu erfassen. Der on-axis Sensor kann einen Quotientenpyrometer, Photodioden und/oder eine Hochgeschwindigkeitskamera umfassen, die zur Ermittlung der Temperatur des Pulverbades gestaltet ist. Auf der Bauplatte innerhalb des Baubehälters kann sich das Pulverbad befinden, welches durch das selektive Schmelzen erzeugte Werkstück umgibt.

Der Quotientenpyrometer kann dazu ausgelegt sein, die Maximaltemperaturen im Pulverbad zu erfassen. Mit Hilfe der Hochgeschwindigkeitskamera kann eine Pulverbadform und eine Verteilung einer Wärmestrahlungsintensität im Pulverbad erfasst werden, was zu einem verbesserten Gesamtverständnis des Prozesses beitragen kann. Mit den Photodioden kann auch die Wärmestrahlung im Schmelzbad bzw. Pulverbad erfasst werden.

Auf diese Weise kann eine präzise Erfassung der thermischen Prozessemissionen in der Baukammer realisiert werden, wodurch eine Voraussetzung für eine Echtzeitsteuerung der additiven Fertigung erfüllt werden kann.

Die vorliegende Offenbarung umfasst weiterhin ein additives Fertigungsverfahren, das die folgenden Schritte umfasst, nicht notwendigerweise in dieser Reihenfolge:

| | |
|---|---|
| S1 | Aufbringen oder Abtragen eines Pulvermaterials auf eine oder von einer Bauplatte mittels einer Rakelvorrichtung mit mindestens einem Beschichterelement, |
| S2 | Aufnehmen von Bilddaten von der Bauplatte und/oder von der Pulverschicht mittels einer optische Vorrichtung mit einem optischen, und |
| S3 | Element Anheben und/oder Absenken der Bauplatte mittels einer Hubvorrichtung, wobei die Hubvorrichtung durch eine Steuereinheit auf Grundlage der Bilddaten gesteuert wird. |

Auf diese Weise kann ein einwandfreier Ablauf der additiven Fertigung gewährleitet werden und die Produktivität der additiven Fertigung kann erhöht werden. Insbesondere kann eine Echtzeitsteuerung des Fertigungssystems durch eine parallele Überwachung der additiven Fertigung realisiert werden.

In einer Ausführungsform kann das additive Fertigungsverfahren Ausrichten der Bauplatte mittels mindestens eines Kontaktsensors umfassen. Dafür kann die Bauplatte mittels der Hubvorrichtung an den Boden der Baukammer angehoben werden. Der Kontaktsensor kann dabei an mehreren Stellen den Kontakt mit der Bauplatte erfassen. Auf diese Weise kann eine Position der Bauplatte, insbesondre Höhe und Neigung relative zu einer horizontalen Ebene präzise erfasst werden und entsprechend der Messergebnisse korrigiert werden.

Die Bauplatte kann im Anschluss etwas mehr als 3 mm unterhalb der berechneten Bauplattenposition (Niveau 0) bei Kontakt abgesenkt werden. Somit kann sich die Bauplatte minimal unterhalb des Niveau 0 befinden. Das Niveau 0 kann beispielsweise die Position eines Bodens der Baukammer sein, an dem der Pulverbehälter, der Baubehälter und/oder der Überlaufbehälter gekoppelt werden können. Auf diese Weise kann sichergestellt werden, dass die Rakelvorrichtung beim Betrieb nicht mit der Bauplatte in Kontakt kommt oder kollidiert, da das Beschichterelement ca. 0.05 mm oberhalb von Niveau 0 liegen kann.

In einer Ausführungsform werden die Schritte S1 (Abtragen), S2 (Bilddatenaufnahme) und S3 (Anheben) wiederholt bis die Auswertung ergibt, dass die Bauplatte im Wesentlichen pulverfrei ist. In diesem Fall folgt ein Festlegen der Position des Beschichterelements relativ zu der Bauplatte als Referenzposition für dieses Beschichterelement.

Nach der Ausrichtung der Bauplatte kann das optische Element ein Referenzbild von der noch vom Pulvermaterial unberührten Bauplatte erstellen. Im folgenden Schritt kann das Beschichterelement eine Pulverschicht auf die Bauplatte auftragen. Diese Pulverschicht kann, insofern die Position der Bauplatte nach der Ausrichtung der Bauplatte nicht verändert wird, im Mittel eine Stärke von etwa 0.2 + 0.1 mm aufweisen. Nach dem Auftrag der Pulverschicht kann die Bauplatte um einen Betrag von 10 - 100 µm angehoben.

Die Rakelvorrichtung kann im Anschluss einen Teil der angehobenen Pulverschicht abtragen und zugleich ein Foto von der Pulversituation auf der Bauplatte kann durch das optische Element erstellt werden. Nachdem die Pulverschicht abgetragen wurde, kann ein bildverarbeitender Algorithmus auf Basis des Referenzbildes überprüfen, ob die Bauplatte noch vollständig mit Pulver bedeckt ist oder ob bereits vom Pulver unberührte Bauplattenbereiche durchschimmern.

Bestätigt der Algorithmus die noch mit dem Pulvermaterial vollständig bedeckte Bauplatte, kann die Schritte S1 bis S3 mit dem Abtragen einer 10-100 µm starken Pulverschicht wiederholt werden. Diese Schritte können sich so lange wiederholt werden, bis das optische Element, i.e. Off-axis-Kamera und der damit verknüpfte Algorithmus minimale Reste vom Pulvermaterial auf der Bauplatte feststellt. Idealerweise kann die Position der Bauplatte als Startposition der additiven Fertigung eingestellt werden, wenn nur noch wenige Bereiche der Bauplatte mit dem Pulvermaterial bedeckt sind.

Das Fertigungssystem, vorzugsweise die Steuereinheit kann dann die genaue horizontale Position der Bauplatte in Verbindung mit dem zum Einsatz kommenden Beschichterelement erfassen und speichern. Für die übrigen Beschichterelemente im Rakelrevolver können die oben beschriebenen Schritte wiederholt werden, um eine optimale Position der Bauplatte für jedes Beschichterelement zu ermitteln. Ist für jedes Beschichterelement innerhalb des Rakelrevolvers die genaue vertikale Position der Bauplatte bekannt, hat es den Vorteil, dass man während der laufenden additiven Fertigung alle zur Verfügung stehenden Beschichterelemente einwandfrei verwenden kann. Bei einem Wechsel des Beschichterelements während des Betriebs kann das Fertigungssystem gegebenenfalls nur geringe Korrekturen der vertikalen Position vornehmen, um die beschichterelementspezifische optimale Position einzunehmen.

In einer Ausführungsform ist das Aufnehmen von Bilddaten auf Wellenlängen zwischen 820 und 870 nm, bevorzugt 830 bis 860 nm, beschränkt. Sichtbares Licht und/oder Laserstrahlung wird ausgeblendet. In einer Ausführungsform umfasst das additive Fertigungsverfahren weiterhin ein Beleuchten der Pulverschicht mit Wellenlängen zwischen 820 und 870 nm, bevorzugt 830 bis 860 nm beim Aufnehmen der Bilddaten im Schritt S2. Mit anderen Worten kann das optische Element, i.e. die Off-axis Kamera eine Filtervorrichtung zur Erfassung von Bilddaten nur mit Wellenlängen zwischen 820 und 870 nm, bevorzugt 830 bis 860 nm, aufweisen.

Zur Beleuchtung der frisch aufgetragenen Pulverschicht kann das in der Rakelvorrichtung integrierte Beleuchtungsmittel, e.g. NIR-LED-Leiste verwendet. Das Beleuchtungsmittel kann dabei so positioniert, dass ein fehlerhafter Pulverauftrag einen Schattenwurf auf der Pulverschicht provoziert, der von der oberhalb des Baufelds angebrachten optischen Vorrichtung erfasst wird.

Die Baukammer kann daher so eingerichtet sein, dass keine störenden Lichtsignale von außen in die Baukammer eintreten können. Die Off-axis-Kamera kann ausschließlich das reflektierte Licht von der Pulverbettoberfläche erfassen. Da der frische Pulverauftrag wie auch die Beleuchtung durch die Bewegung der Rakelvorrichtung bei konstanter Geschwindigkeit passiert, entsteht während der Langzeitaufnahme durch die Off-axis-Kamera eine gleichmäßig beleuchtete Aufnahme.

In einer Ausführungsform umfasst das additive Fertigungsverfahren weiterhin ein lösbares Verbinden der Rakelvorrichtung mit einem Behälterdeckel eines Baubehälters und/oder eines Pulverbehälters und ein Transportieren des Behälterdeckels zu einem Lagerort mittels der Rakelvorri chtung.

Zur Aufrechterhaltung einer inertisierten Atmosphäre innerhalb des Bau- und Pulverbehälters sollen die Behälter außerhalb des additiven Fertigungssystems ausschließlich mit aufgesetzten Behälterdeckel gehandhabt werden. Innerhalb der Baukammer können die Behälterdeckel erst abgenommen werden, wenn der Inertisierungszustand der Baukammer vorliegt. Sobald die Schutzgasatmosphäre vorliegt und der Restsauerstoffgehalt unterhalb einer Zielschwelle liegt, können die Behälterdeckel des Bau- und Pulverbehälters mittels der Rakelvorrichtung entnommen werden.

Dazu kann die Rakelvorrichtung über den Deckel eines Behälters fahren. Gleichzeitig können der Trägerkörper und/oder der Rakelrevolver mittels des Befestigungselements, das beispielsweise wie eine T-förmige Nut ausgebildet ist, den Behälterdeckel über das darauf befindliche Verbindungselement, das beispielsweise wie ein T-förmiger Vorsprung ausgebildet ist, formschlüssig greifen. Auf diese Weise können die Behälterdeckel des Baubehälters und/oder Pulverbehälters von dem entsprechenden Behälter einwandfrei entnommen werden.

Der von der Rakelvorrichtung aufgenommene Behälterdeckel kann mittels eines Höhenverstellungselements vom Boden der Baukammer angehoben werden, um einen kontaktlosen Transport des Deckels mit dem Baufeld sicherzustellen. Durch eine horizontale Bewegung der Rakelvorrichtung kann der Behälterdeckel zu dem Lagerort transportiert werden. Der Lagerort für den Behälterdeckel kann sich innerhalb der Baukammer, jedoch außerhalb des Baufeldes befinden.

Weitere Merkmale, Vorteile und Anwendungsmöglichkeiten der vorliegenden Offenbarung ergeben sich aus der nachfolgenden Beschreibung, den Ausführungsbeispielen und den Figuren. Alle beschriebenen und/oder bildlich dargestellten Merkmale können unabhängig von ihrer Darstellung in einzelnen Ansprüchen, Figuren, Sätzen oder Absätzen miteinander kombiniert werden. In den Figuren stehen gleiche Bezugszeichen für gleiche oder ähnliche Objekte.

### Kurze Beschreibung der Figuren

- Figur 1: zeigt ein Fertigungssystem zur additiven Fertigung eines Werkstücks gemäß einer Ausführungsform.
- Figur 2: zeigt eine Rakelvorrichtung eines Fertigungssystems zur additiven Fertigung eines Werkstücks gemäß einer Ausführungsform.
- Figur 3: zeigt ein Fertigungssystem zur additiven Fertigung eines Werkstücks gemäß einer Ausführungsform.
- Figur 4: zeigt ein Fertigungssystem zur additiven Fertigung eines Werkstücks gemäß einer Ausführungsform.
- Figur 5: zeigt ein Fertigungssystem zur additiven Fertigung eines Werkstücks gemäß einer Ausführungsform.
- Figur 6: zeigt ein Fertigungssystem zur additiven Fertigung eines Werkstücks gemäß einer Ausführungsform.
- Figur 7: zeigt ein Flussdiagramm eines additiven Fertigungsverfahrens.

### Detaillierte Beschreibung der Ausführungsbeispiele

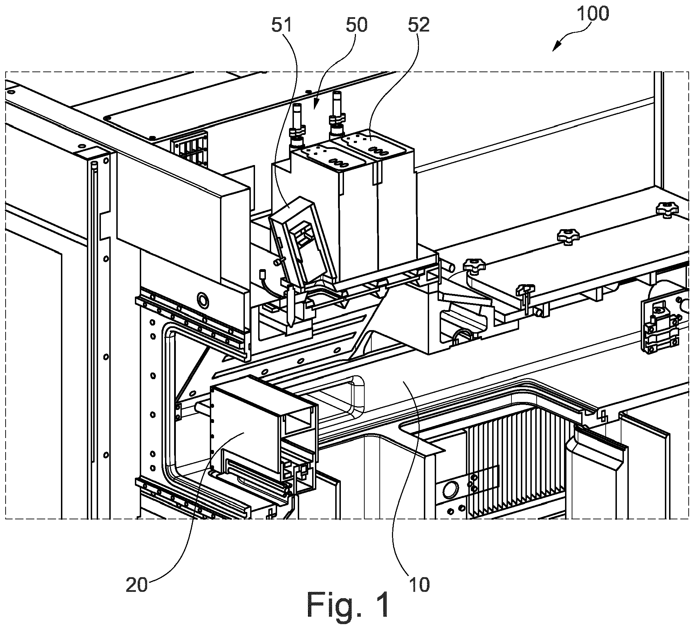

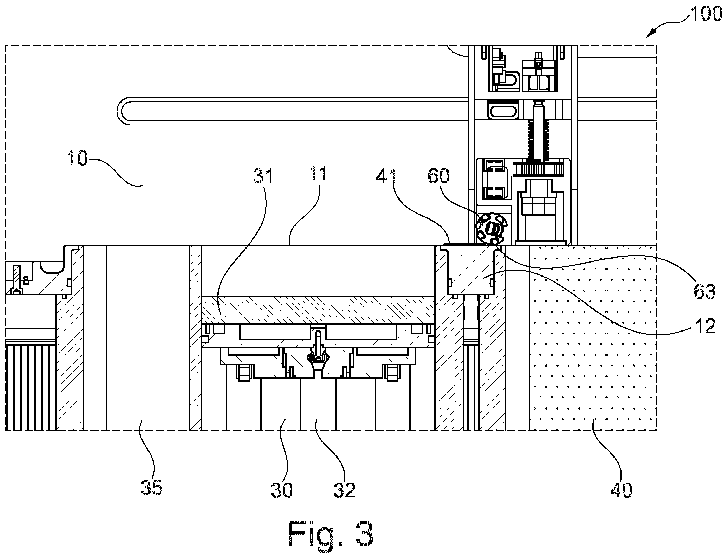

Figur 1 zeigt ein Fertigungssystem 100 zur additiven Fertigung eines Werkstücks. Das Fertigungssystem 100 umfasst eine Baukammer 10, mit der ein Baubehälter 30 und ein Pulverbehälter 40 gekoppelt werden können (siehe auch Figur 3). Der Pulverbehälter 40 ist zum Bevorraten vom Pulvermaterial 41 gestaltet und der Baubehälter 30 ist zur Durchführung einer additiven Fertigung eines Werkstücks auf einer Bauplatte 31, die sich im Baubehälter 30 befindet, gestaltet.

Die Baukammer 10 weist eine Öffnung auf, die beispielsweise durch ein optisch transparent Material abgedichtet ist. Durch diese Öffnung kann der Laserstrahl bereitgestellt werden, um eine frische Pulverschicht, die auf die Bauplatte 31 aufgetragen ist, zu belichten.

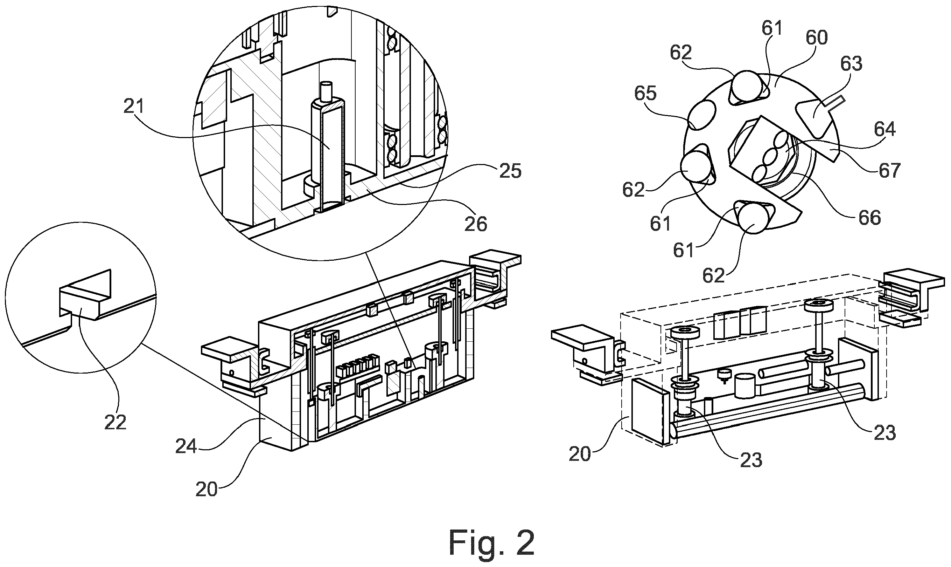

In der Baukammer 10 befindet sich eine Rakelvorrichtung 20, die das frische Pulvermaterial 41 von dem Pulverbehälter 40 auf die Bauplatte 31 des Baubehälters 30 schichtweise aufträgt und das überschüssige Restpulvermaterial von der Bauplatte 31 in einen Pulverüberlaufbehälter 35 abträgt (siehe auch Figur 2).

Das Fertigungssystem 100 umfasst weiterhin eine optische Vorrichtung 50, die ein Off-axis optisches Element 51 und mindestens einen On-axis Sensor 52 umfasst. Das Off-axis optisches Element 51 kann beispielsweise eine off-axis Kamera umfassen. Das Off-axis optisches Element 51 ist zur Aufnahme von Bilddaten von der Bauplatte und/oder von der Pulverschicht gestaltet. Die Off-axis Kamera 51 weist eine Filtervorrichtung auf, die zur Erfassung von Bilddaten nur mit Wellenlängen zwischen 820 und 870 nm, bevorzugt 830 bis 860 nm gestaltet ist. Der On-axis Sensor 52 kann beispielsweise einen Quotientenpyrometer umfassen. Der On-axis Sensor 52 ist in einem Strahlengang zur Bestrahlung der Pulverschicht angeordnet ist, um Prozessemissionen aus einem Schmelzbadbereich beim Bestrahlen der Pulverschicht zu erfassen.

Figur 2 zeigt die Rakelvorrichtung 20 des additiven Fertigungssystems 100. Die Rakelvorrichtung 20 umfasst einen Rakelrevolver 60 mit einem zylindrischen Grundkörper 67, dessen Umfangsfläche mindestens eine Aufnahme 61 aufweist, in die ein Beschichterelement 62 eingefügt ist. Das Beschichterelement 62 ist zum Aufbringen oder Abtragen des Pulvermaterials 41 auf die oder von der Bauplatte 31 des Baubehälters 30 gestaltet. Der Rakelrevolver 60 weist vorzugsweise mehrere Aufnahmen 61 auf, in die weitere Beschichterelemente 62 eingefügt sind. Das Beschichterelement 62 kann eine Gummilippe oder eine Klinge aus Metall und/oder Keramik sein.

In einer der mehreren Aufnahmen 61 der Rakelvorrichtung 60 ist ein Reinigungselement 63 positioniert, das zum Abtragen von Pulverresten nach der additiven Fertigung des Werkstücks gestaltet ist. Das Reinigungselement 63 kann beispielsweise eine silikon-getränkte Bürste und/oder eine Carbonbürste sein.

Wie in Figur 3 gezeigt, kann das Reinigungselement 63 eine Schnittstelle 12 zwischen einem Boden 11 der Baukammer 10 und dem Pulverbehälter 40, dem Pulverüberlaufbehälter 35 und/oder dem Baubehälter 30 reinigen. Nach dem Abschluss der additiven Fertigung kann sich der Rakelrevolver 60 drehen und auf das Reinigungselement 63 umschalten, sodass sich dieses dem Boden 11 der Baukammer 10 zugewandt ist. Das Reinigungselement 63 kann somit den Pulverrest und/oder den Schweißspritzer vom Boden 11 der Baukammer 10 und/oder der Schnittstelle 12 zwischen dem Boden 11 und den Behältern 30, 40, 35 abtragen. Auf diese Weise kann es sichergestellt werden, dass kein Pulverrest während der Entnahme der Behälter verschleppt werden kann.

Ferner ist in einer der mehreren Aufnahmen 61 der Rakelvorrichtung 60 ein Beleuchtungselement 64 positioniert, das zur Beleuchtung der Pulverschicht für die Aufnahme der Bilddaten gestaltet ist. Das Beleuchtungselement 64 umfasst mindestens ein Leuchtmittel, wie z.B. LED, Halogen, Laser, Neon und/oder Xenon Lampe, vorzugsweise NIR (Near Infrared) - LED.

Das Beschichterelement 62, das Reinigungselement 63 und/oder das Beleuchtungselement 64 erstrecken sich zumindest teilweise in Längsrichtung des zylindrischen Körpers 67 des Rakelrevolvers 60.

Die Rakelvorrichtung 20 umfasst weiterhin einen Trägerkörper 24, an dem der Rakelrevolver 60 mittels eines Wechselmechanismuselements 66 lösbar befestigt ist. Das Wechselmechanismuselement 66 kann dafür sorgen, dass der Rakelrevolver 60 einfach und schnell von der Rakelvorrichtung 20 entfernt werden kann. Das Wechselmechanismuselement 66 kann über eine formschlüssige, kraftschlüssige, (elektro-)magnetische und/oder Klemm-Verbindung verfügen.

Die Rakelvorrichtung 20 umfasst weiterhin mindestens einen Abstandssensor 21 zum Erfassen eines Abstands zwischen der Bauplatte 31und dem Beschichterelement 62. Der Abstandssensor 21 ist auf einer Bodenseite 26 der Rakelvorrichtung 20 so angeordnet, dass er dem Boden 11 der Baukammer 10 zugewandt ist. Die Rakelvorrichtung 20 umfasst vorzugsweise mehrere Abstandsensoren 21, um eine präzise Messung des Abstands zwischen der Bauplatte 31 und dem Beschichterelement 62 zu ermöglichen.

Der Abstandssensor 21 kann ferner zur Abstandsmessung zwischen dem Beschichterelement 62 und einer Grundplatte 43 des Pulverbehälters 40 gestaltet sein, um die Menge des im Pulverbehälter 40 aktuell vorhandenen Pulvermaterials 41 zu ermitteln. Der Abstandssensor 21 kann beispielsweise ein induktiver Sensor, ein Ultraschallsensor oder ein Radarsensor sein, der eine berührungslose Abstandsmessung ermöglicht.

Die Rakelvorrichtung 20 umfasst weiterhin einen Kontaktsensor 25 zum Erfassen eines Kontakts zwischen der Bauplatte 31 und dem Beschichterelement 62. Der Kontaktsensor 25 ist an der Bodenseite 26 der Rakelvorrichtung 20 so angeordnet, dass sie der Bauplatte 31 des Baubehälters 30 zugewandt ist.

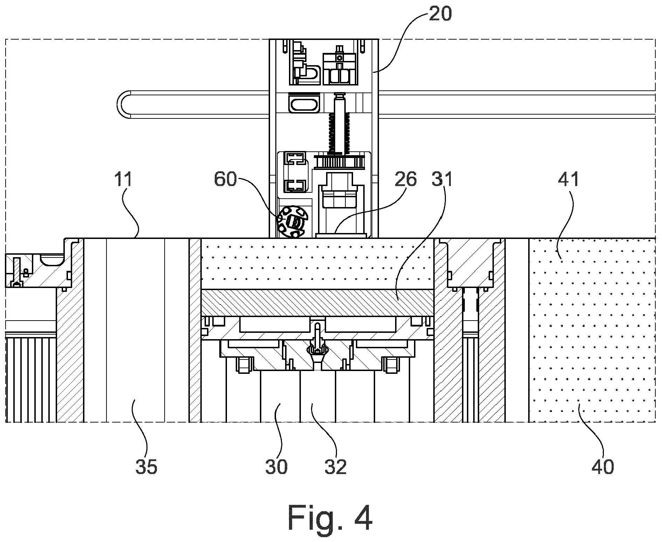

Wie in Figur 4 gezeigt, ist der Baubehälter 30 mit einer Hubvorrichtung 32 gekoppelt, die zum Anheben und/oder Absenken der Bauplatte 31 innerhalb des Baubehälters 30 gestaltet ist. Der Grundplatte 43 des Pulverbehälters 40 kann ebenfalls mit einer separaten Hubvorrichtung (nicht gezeigt) verbunden sein, um das frische Pulvermaterial 41 an den Boden 11 der Baukammer zu befördern.

Vor dem Beginn der additiven Fertigung kann die Bauplatte 31 mittels der Hubvorrichtung 32 an den Boden 11 der Baukammer 10 angehoben werden. Der Kontaktsensor 25 kann dabei an mehreren Stellen den Kontakt mit der Bauplatte 31 erfassen. Um diese Erfassung zu erleichtern, kann die Rakelvorrichtung 20 zwei oder mehrere Kontaktsensoren 25 aufweisen, die an der Bodenseite 26 der Rakelvorrichtung 20 voneinander beabstandet angeordnet sein können. Auf diese Weise kann eine Position der Bauplatte 31, insbesondere Höhe und Neigung relative zu einer horizontalen Ebene präzise erfasst werden und entsprechend der Messergebnisse korrigiert werden.

Die Rakelvorrichtung 20 umfasst weiterhin ein Befestigungselement 22 zur lösbaren Befestigung eines Behälterdeckels 33, 42 des Baubehälters 30 und/oder des Pulverbehälters 40 und ein Höhenverstellungselement 23 zur Höhenbeweglichkeit des gehaltenen Behälterdeckels 33, 42. Zur Aufrechterhaltung einer inertisierten Atmosphäre innerhalb des Bau- 30 und Pulverbehälters 40 sollen die Behälter 30, 40 außerhalb des additiven Fertigungssystems 100 ausschließlich mit aufgesetzten Behälterdeckel 33, 42 gehandhabt werden.

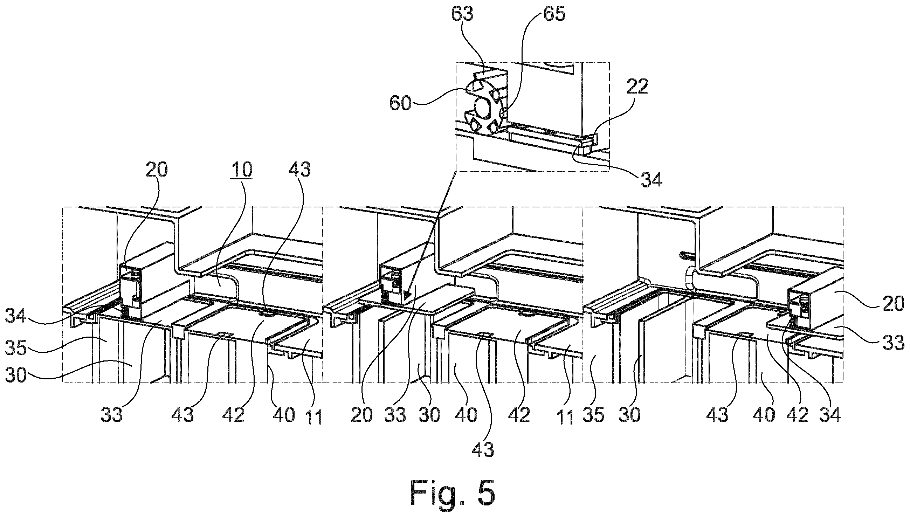

Wie in Figur 5 gezeigt, fährt die Rakelvorrichtung 20 nach einer Einführung des Baubehälters 30 und Pulverbehälters 40 in die Baukammer 10 und einer Inertisierung der Baukammer 10 über einen Behälterdeckel 33, 42 dieser Behälter 30, 40. Gleichzeitig kann der Trägerkörper 24 der Rakelvorrichtung 20 mittels des Befestigungselements 22, das wie eine T-förmige Nut ausgebildet ist, den Behälterdeckel 33, 42 über ein darauf befindliches Verbindungselement 34, das wie ein T-förmiger Vorsprung ausgebildet ist, formschlüssig greifen. Vorzugsweise umfasst die Rakelvorrichtung 20 mindestens zwei Befestigungselemente 22 und der Behälterdeckel 33, 42 umfasst mindestens zwei Verbindungselemente 34, 43, um den Deckel 33, 42 von jeweiligem Behälter 30, 40 gleichmäßig in vertikaler Richtung anheben zu können.

Das Höhenverstellungselement 23 kann den Behälterdeckel 33, 42, der entweder von dem Pulverbehälter 40 oder dem Baubehälter 30 abgenommen wurde, in vertikaler Richtung anheben, um einen kontaktlosen Transport des Deckels 33, 42 mit dem Baufeld sicherzustellen. Damit sich der Behälterdeckel 33, 42 während des Transports nicht von der Rakelvorrichtung 20 lösen kann, wird seine Bewegung durch einen im Rakelrevolver 60 angeordneten Nocken 65 beschränkt. Der Nocken 65 kann in einer entgegengesetzten Richtung relativ zu der Einführrichtung des Deckels 33, 42 an die Rakelvorrichtung 20 angeordnet sein. Auf diese Weise kann der Behälterdeckel 33,42 bei der Aufnahme nicht aus dem Befestigungselement 22 der Rakelvorrichtung 20 herausgleitet, sondern wird dieser über den Nocken 65 festgehalten.

Der von der Rakelvorrichtung 20 entnommenen Baubehälterdeckel 33 und Pulverbehälterdeckel 42 werden zu einem Lagerort (nicht gezeigt) transportiert, der sich innerhalb der Baukammer 10, jedoch außerhalb des Baufeldes befinden.

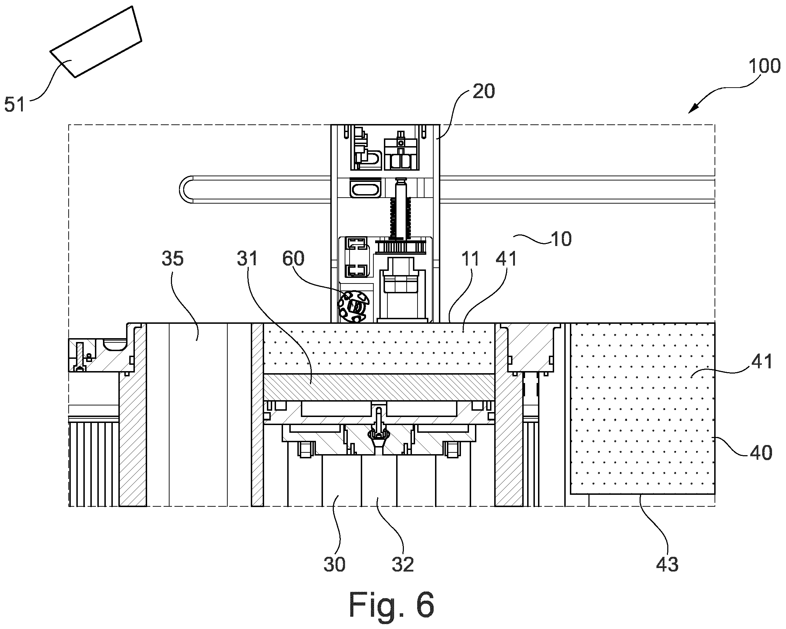

Figur 6 zeigt Pulverauftragsüberwachung während der additiven Fertigung. Beim Auftragen des Pulvermaterials 41 kann in Fahrtrichtung der Rakelvorrichtung 20 linienartige Strukturen entstehen. Eine Sichtbarkeit des solchen Pulverauftragsfehlers kann sich am stärksten erhöhen, wenn er durch eine seitliche Beleuchtung zur Erzeugung eines Schattens angestrahlt werden. Der Pulverauftragsfehler und/oder der Beschichtungsfehler kann indirekt über einen charakteristischen Schatten mit Hilfe des optischen Elements 51, vorzugsweise der Off-axis Kamera erfasst werden.

Die Steuereinheit (nicht gezeigt) kann mithilfe der optischen Vorrichtung 50 eine Auftragsqualität des Pulvermaterials 41 erfassen und einen Fehler an dem aktuell verwendeten Beschichterelement 62 feststellen, wenn die Auftragsqualität des Pulvermaterials 41 von der vorbestimmten Anforderung abweicht. Im Falle des Fehlers kann sich der Rakelrevolver 60 nach Schwere der Beschädigungen des aktuellen Beschichterelements 62 drehen und auf ein nächstes, insbesondere fehlerfreies Beschichterelement 62 umschalten.

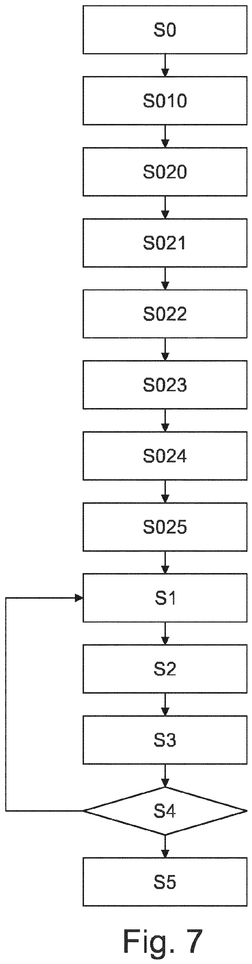

Figur 7 zeigt ein Flussdiagramm eines additiven Fertigungsverfahrens.

Im Schritt S0 werden der Baubehälter 30 und der Pulverbehälter 40 in die Baukammer 10 des Fertigungssystems 100 eingefügt und die Baukammer 10 wird anschließend inertisiert, um den Sauerstoffgehalt in der Baukammer 10 zu minimieren.

Im Schritt S010 wird der Deckel 33 des Baubehälters 30 lösbar mit dem Befestigungselement 22 der Rakelvorrichtung 20 verbunden. Der Deckel 33 wird mittels des Höhenverstellungselements 23 angehoben und durch eine horizontale Bewegung der Rakelvorrichtung 20 zu dem Deckellagerort transportiert.

Im Schritt S020 wird eine Position der Bauplatte 31 ausgerichtet. Dafür wird die Bauplatte 31 mittels der Hubvorrichtung 32 an den Boden 11 der Baukammer 10 angehoben S021. Der Kontaktsensor 25 kann dabei an mehreren Stellen den Kontakt mit der Bauplatte 31 erfassen S022. Auf diese Weise wird eine Position der Bauplatte 31, insbesondere Höhe und Neigung relative zu einer horizontalen Ebene präzise erfasst und entsprechend der Messergebnisse korrigiert S023.

Die Bauplatte 31 wird im Anschluss etwas mehr als 3 mm unterhalb der berechneten Bauplattenposition (Niveau 0) bei Kontakt abgesenkt S024. Somit kann sich die Bauplatte 31 minimal unterhalb des Niveau 0 befinden. Das Niveau 0 kann beispielsweise die Position eines Bodens 11 der Baukammer 10 sein, an dem ein Pulverbehälter 40, ein Baubehälter 30 und/oder ein Pulverüberlaufbehälter gekoppelt werden können. Auf diese Weise kann sichergestellt werden, dass die Rakelvorrichtung 20 beim Betrieb nicht mit der Bauplatte 31 in Kontakt kommt oder kollidiert, da das Beschichterelement ca. 0.05 mm oberhalb von Niveau 0 liegen kann. Nach der Ausrichtung der Bauplatte 31 erstellt das optische Element 51 ein Referenzbild von der noch vom Pulvermaterial 41 unberührten Bauplatte S025.

Im folgenden Schritt S1 wird das Pulvermaterial 41 mittels des Beschichterelements 62 der Rakelvorrichtung 20 auf die Bauplatte 31 aufgetragen. Nach dem Auftrag der Pulverschicht wird die Bauplatte 31 um einen Betrag von 10 - 100 µm angehoben S2. Die Rakelvorrichtung 20 trägt im Anschluss einen Teil der angehobenen Pulverschicht ab.

Im Schritt S3 werden Bilddaten von der Pulverschicht auf der Bauplatte 31 mittels der optischen Vorrichtung 50, vorzugsweise der Off-axis Kamera 51 aufgenommen. Im Schritt S31 überprüft ein bildverarbeitender Algorithmus auf Basis des Referenzbildes, ob die Bauplatte 31 noch vollständig mit Pulver bedeckt ist oder ob bereits vom Pulver unberührte Bauplattenbereiche durchschimmern.

Bestätigt S4 der Algorithmus die noch mit dem Pulvermaterial 41 vollständig bedeckte Bauplatte 31, kann die Schritte S1 bis S3 mit dem Abtragen einer 10**-100 µm starken** Pulverschicht wiederholt werden. Diese Schritte können sich so lange wiederholt werden, bis das optische Element 51, i.e. Off-axis-Kamera und der damit verknüpfte Algorithmus minimale Reste vom Pulvermaterial 41 auf der Bauplatte 31 feststellt. Idealerweise kann die Position der Bauplatte 31 als Startposition der additiven Fertigung eingestellt werden, wenn nur noch wenige Bereiche der Bauplatte 31 mit dem Pulvermaterial 41 bedeckt sind.

Die Steuereinheit des Fertigungssystems 100 speichert S5 die genaue horizontale Position der Bauplatte 31 in Verbindung mit dem zum Einsatz kommenden Beschichterelement 62. Für die übrigen Beschichterelemente 62 im Rakelrevolver 60 können die oben beschriebenen Schritte wiederholt werden, um eine optimale Position der Bauplatte 31 für jedes Beschichterelement 62 zu ermitteln.

Ergänzend sei darauf hingewiesen, dass "umfassend" und "aufweisend" keine anderen Elemente oder Schritte ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Fertigungssystem (100) zur additiven Fertigung eines Werkstücks, umfassend
- eine Bauplatte (31),
- eine Hubvorrichtung (32) für die Bauplatte (31),
- eine Rakelvorrichtung (20),
- eine optische Vorrichtung (50), und
- eine Steuereinheit,
wobei die Rakelvorrichtung (20) mindestens ein Beschichterelement (62) zum Aufbringen oder Abtragen eines Pulvermaterials (41) auf die oder von der Bauplatte (31) umfasst,
wobei die Rakelvorrichtung (20) einen Rakelrevolver (60) mit einem zylindrischen Grundkörper (67) umfasst, dessen Umfangsfläche mindestens eine Aufnahme (61) aufweist, in die das Beschichterelement (62) eingefügt ist, und eine weitere Aufnahme (61) aufweist, in die ein Beleuchtungselement (64) zur Beleuchtung der Pulverschicht für die Aufnahme der Bilddaten einfügbar ist,
wobei die optische Vorrichtung (50) ein optisches Element (51) zur Aufnahme von Bilddaten von der Bauplatte (31) und/oder von der Pulverschicht umfasst,
wobei die Hubvorrichtung (32) zum Anheben und/oder Absenken der Bauplatte (31) gestaltet ist, und
wobei die Steuereinheit gestaltet ist, um die Hubvorrichtung (32) und die Rakelvorrichtung (20) auf Grundlage der Bilddaten zu steuern.

2. Additives Fertigungssystem (100) nach Anspruch 1, wobei der Rakelrevolver (60) mindestens eine weitere Aufnahme (61) aufweist, in die ein weiteres Beschichterelement (62) einfügbar ist.

3. Additives Fertigungssystem (100) nach Anspruch 1 oder 2, wobei der Rakelrevolver (60) mindestens eine weitere Aufnahme (61) aufweist, in die ein Reinigungselement (63) einfügbar ist, der ein Mittel zum Abtragen von Pulverresten umfasst.

4. Additives Fertigungssystem (100) nach einem der vorherigen Ansprüche, wobei das optische Element (51) eine Off-axis-Kamera mit einer Filtervorrichtung zur Erfassung von Bilddaten nur mit Wellenlängen zwischen 820 und 870 nm, bevorzugt 830 bis 860 nm gestaltet ist.

5. Additives Fertigungssystem (100) nach einem der vorherigen Ansprüche, wobei die Rakelvorrichtung (20) einen Trägerkörper (24) umfasst und der Trägerkörper (24) und/oder der Rakelrevolver (60) einen Wechselmechanismuselement (66) zur lösbaren Befestigung des Rakelrevolvers (60) an dem Trägerkörper (24) umfasst.

6. Additives Fertigungssystem (100) nach dem vorherigen Anspruch, wobei der Trägerkörper (24) und/oder der Rakelrevolver (60) ein Befestigungselement (22) zur lösbaren Befestigung eines Behälterdeckels (33, 42) von einem Baubehälter (30) und/oder einem Pulverbehälter (40) umfasst.

7. Additives Fertigungssystem (100) nach dem vorherigen Anspruch, wobei der Trägerkörper (24) und/oder der Rakelrevolver (60) ein Höhenverstellungselement (23) zur Höhenbeweglichkeit des gehaltenen Behälterdeckels (33,42) umfasst.

8. Additives Fertigungssystem (100) nach einem der vorherigen Ansprüche, weiterhin umfassend einen Abstandssensor (21) zum Erfassen eines Abstands zwischen der Bauplatte (31) und der Beschichterelement (62).

9. Additives Fertigungssystem (100) nach einem der vorherigen Ansprüche, weiterhin umfassend einen Kontaktsensor (25) zum Erfassen eines Kontakts zwischen der Bauplatte (31) und dem Beschichterelement (62).

10. Additives Fertigungssystem nach einem der vorherigen Ansprüche, wobei die optische Vorrichtung (50) weiterhin mindestens einen On-axis-Sensor (52) umfasst, der in einem Strahlengang zur Bestrahlung der Pulverschicht angeordnet ist, um Prozessemissionen aus einem Schmelzbadbereich beim Bestrahlen der Pulverschicht zu erfassen.

11. Ein additives Fertigungsverfahren, umfassend:
| | |
|---|---|
| S1 | Aufbringen oder Abtragen eines Pulvermaterials (41) auf eine oder von einer Bauplatte (31) mittels einer Rakelvorrichtung (20) mit mindestens einem Beschichterelement (62), wobei die Rakelvorrichtung (20) einen Rakelrevolver (60) mit einem zylindrischen Grundkörper (67) umfasst, dessen Umfangsfläche mindestens eine Aufnahme (61) aufweist, in die das Beschichterelement (62) eingefügt ist, und eine weitere Aufnahme (61) aufweist, in die ein Beleuchtungselement (64) zur Beleuchtung der Pulverschicht für die Aufnahme der Bilddaten einfügbar ist, |
| S2 | Aufnehmen von Bilddaten von der Bauplatte (31) und/oder von der Pulverschicht mittels einer optische Vorrichtung (50) mit einem optischen Element (51), und |
| S3 | Anheben und/oder Absenken der Bauplatte (31) mittels einer Hubvorrichtung (32), wobei die Hubvorrichtung (32) und die Rakelvorrichtung (20) durch eine Steuereinheit auf Grundlage der Bilddaten gesteuert wird. |

12. Additives Fertigungsverfahren nach dem vorherigen Anspruch, wobei die Schritte S1 (Abtragen), S2 (Bilddatenaufnahme) und S3 (Anheben) wiederholt werden bis die Auswertung ergibt, dass die Bauplatte (31) im Wesentlichen pulverfrei ist, und in diesem Fall, Festlegen der Position des Beschichterelements relativ zu der Bauplatte (31) als Referenzposition für dieses Beschichterelement (62).

13. Additives Fertigungsverfahren nach Anspruch 11 oder 12, wobei das Aufnehmen von Bilddaten auf Wellenlängen zwischen 820 und 870 nm, bevorzugt 830 bis 860 nm, beschränkt ist und sichtbares Licht und/oder Laserstrahlung ausgeblendet wird.

14. Additives Fertigungsverfahren nach einem der Ansprüche 11 bis 13, weiter umfassend ein Beleuchten der Pulverschicht mit Wellenlängen zwischen 820 und 870 nm, bevorzugt 830 bis 860 nm beim Aufnehmen der Bilddaten im Schritt S2.

15. Additives Fertigungsverfahren nach einem der Ansprüche 11 bis 14, weiterhin umfassend ein lösbares Verbinden der Rakelvorrichtung (20) mit einem Behälterdeckel (33, 42) eines Baubehälters (30) und/oder eines Pulverbehälters (40) und ein Transportieren des Behälterdeckels (33, 42) zu einem Lagerort mittels der Rakelvorrichtung (20).
